# EUROPEAN PATENT SPECIFICATION

(11) **EP 1 131 585 B1**
(45) Date of publication and mention of the grant of the patent: **16.10.2002**
(21) Application number: 99956342.2
(22) Date of filing: 12.11.1999
(51) Int. Cl.: F24J 2/04

(54) **METHOD FOR PROVIDING A PAVING OR REVETMENT PROVIDED WITH A HEAT CONVEYING ELEMENT**
VERFAHREN ZU HERSTELLUNG EINER STRASSENDECKE MIT WÄRMETRANSPORTELEMENT
METHODE DE FABRICATION D'UN PAVAGE OU REVETEMENT REALISE AVEC UN ELEMENT CALOPORTEUR

(30) Priority: 16.11.1998 NL 1010564
(43) Date of publication of application: 12.09.2001
(73) Proprietor: N.V.KEMA, 6800 ET Arnhem (NL)
(72) Inventor: RIKKEN, Jacobus, Fredericus, NL-6922 NE Duiven (NL); GITZ, Hubertus, Johannes, Josephus, NL-3401 NL Ijsselsteijn (NL)
(74) Representative: Jorritsma, Ruurd
(86) International application number: NL9900694
(87) International publication number: WO00029791

(56) References cited:
- EP-A- 0 029 565
- AU-B- 524 990
- DE-A- 19 740 644
- GB-A- 2 256 702
- PATENT ABSTRACTS OF JAPAN vol. 017, no. 682 (M-1528), 14 December 1993 (1993-12-14) -& JP 05 230806 A (SEIKI TOKYU KOGYO KK), 7 September 1993 (1993-09-07)

## Description

The invention relates to a paving or revetment comprising a top surface and a conveying element for conveying liquid, such as water, along the top surface and for the transfer of heat between the top surface and the liquid.

It is known to heat floor surfaces by embedding current conductors or liquid conductors in the floor surface and conducting electric current or warm liquid through said conductors. It is also known to place a solar collector with a pipe system in a road surface, in which case the dark-coloured road surface acts as an absorption surface and water is conveyed along the heated absorption surface by way of the pipe system.

The heated water is then stored in the ground or is conveyed for space heating through buildings adjoining the road. Such a solar collector system can also be used for subsequently making the stored energy available for keeping surfaces free of ice, such as, for example, carriageway surfaces in the case of bridges or locks. For large-scale use, the embedding of a pipe system in a paving of, for example, a road surface or aircraft runway is relatively expensive by comparison with the costs of primary energy, while the heat gained (exergy) is of low quality.

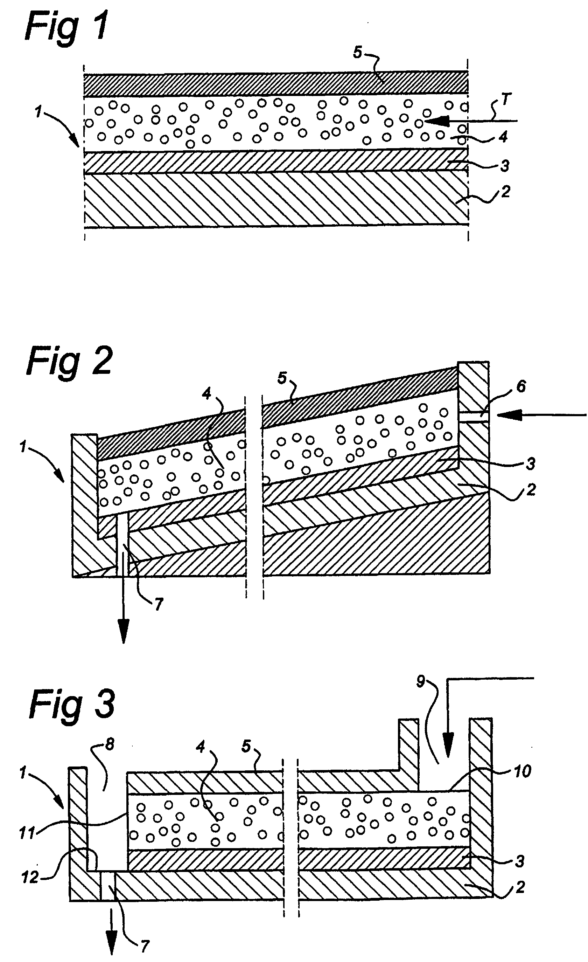

The paving disclosed in document AU 524 990 B comprises a top surface (top of casing 2, fig.3) and a conveying element (core 1, fig.3) for conveying a liquid along the top surface, and for the transfer of heat between the top surface and the liquid. The paving furthermore comprises a top layer (top of casing 2, fig.3) with a porous layer (core 1, fig.3) underneath it having possibly 20% voids (page 3, lines 3-5). A sealing layer (bottom of casing 2, fig.3) situated beneath the porous layer is also present, and discharge elements (3, 4, fig.3) are provided in a longitudinal direction. The discharge element (4, fig.3) connects to the porous layer for the discharge of the liquid from the layer, and at a distance from the discharge element, a supply element (3, fig.3) connects to the porous layer for the supply of liquid to the porous layer.

The manufacturing of the apparatus according to AU 524 990 B requires the top layer being part of a casing surrounding the core of the apparatus. It thus impossible to construct the top layer by asphalt spreading.

An other type of paving is disclosed in GB 2 256 702 A. It is made of resin, thus non suitable for asphalt spreading.

The object of the present invention is a method for providing a paving or revetment provided with a conveying element for heat transfer between the top surface and a liquid, such as water, which is conveyed by means of the conveying element along the top surface, and which is simple and cheap. A further object of the present invention is to provide a paving with a relatively high coefficient of heat transfer between the top surface and the heat conveying element, in which the system can be overlaid in a simple manner and can be reused during replacement or renovation.

To that end, a paving or revetment according to the present invention is characterized in that the resulting paving comprises a top layer with a porous layer underneath it having at least 20% voids, and a sealing layer situated beneath the porous layer, a discharge element being provided in a longitudinal direction, which discharge element connects to the porous layer for the discharge of the liquid from the porous layer, and at a distance from the discharge element provision being made for a supply element extending in the longitudinal direction and connecting to the porous layer for the supply of liquid to the porous layer.

The top layer of the construction according to the present invention has both the function of paving layer or revetment layer and that of absorption surface. In terms of construction, the paving according to the invention has the same bearing power value as a corresponding construction without heat conveying properties and with only an additionally required layer thickness varying between 0 and 2 cm. The solar collector according to the present invention can be placed by means of the existing techniques for road surfacing, for example by means of an asphalt spreader, so that its cost is very low. Furthermore, the solar collector according to the invention has a relatively high coefficient of heat transfer by comparison with a system of pipes embedded in the road surface. Such plastic pipes with a diameter of 1 to 2 cm, lying approximately 6 cm beneath the surface of the paving with a centre-to-centre distance of 6 to 12 cm, are not only expensive, but also relatively inefficient. Unlike a system with pipes, the system according to the present invention can be provided in a simple manner with a new layer of paving material which has the same properties, for example for maintenance of the paving. In the case of a pipe system the pipes would ultimately lie too deep down, while cutting away the top layer can lead to damage to the pipe system.

The solar collector according to the present invention is composed completely of materials which are in standard use in roadbuilding for paving the wearing course, and which can be reused in their entirety after cutting away and grinding during renovation of the system. This is of great importance, since asphalt top layers have a useful service life of 10 to 15 years. Renovation and alterations, such as road diversion or road widening, may also be necessary, and these can be carried out in a simple manner with the solar collector according to the present invention.

The porous layer used preferably comprises a layer of very open-textured asphalt concrete with a predominant granule size between 6 mm and 8 mm, or between 8 mm and 11 mm, or between 11 mm and 16 mm, and with a voids ratio of at least 20%, preferably between 25 and 30%. Water can flow with low flow resistance horizontally through such a layer, from the inlet to the outlet. The outlet of the porous layer is connected to a heat storage means, for example by way of a pump or heat pump, while water is conveyed by way of the inlet from a storage medium to the porous layer. The top layer of the paving can be water-impermeable, in order to prevent the water to be heated from becoming polluted, so that, for example, it cannot or must not be pumped back into the ground. It is also possible to make the top layer an open construction, in order to obtain good water drainage, and in order to place a thin water-impermeable asphalt layer or other impermeable layer such as a geotextile or a plastic or bituminous membrane between the open top layer and the conveying layer.

It is likewise possible to make proper use of the water-draining function of the porous layer, for example in the case of (wide) motorways. In that case the top layer can be made porous, while the voids ratio is preferably kept of the same order of magnitude as that for the porous liquid conveying layer, but with the granule diameter of the top layer preferably being predominantly between 2 and 4 mm. The individual pores then become much smaller, so that water is able to flow easily towards the coarse-grained intermediate layer lying below, but so that (coarse) dirt is not allowed through. Fine dirt (sludge) is removed with the continuous stream of water which is conveyed through the porous layer along the wearing course to the drain construction.

In this embodiment the invention is very suitable for use on motorways or as a paving for dikes and coastal defence structures, and the following five advantages are obtained:
- solar energy is obtained;
- rainwater is drained away vertically (prevention of aquaplaning and splashing and spray);
- a considerable noise reduction by comparison with a dense top layer is obtained;
- the as yet unsolved soiling problem of very open-textured asphalt concrete has been solved, which would also take care of the cleaning problem (also not yet solved); and
- on very hot days the road surface is cooled, so that rutting in heavy traffic is drastically reduced.

So-called double-layer very open-textured asphalt concrete which can be used in a suitable manner as a solar collector of the type described above is manufactured by applicant under the brand name of DUOLAY.

For the conveyance of the water through the porous layer the lateral gradient of the road can be used, said gradient where present being approximately 2%. In such a case the supply element and the discharge element can be formed by a simple channel construction. In cases in which no gradient or an inadequate gradient is present (for example, where roads are very wide) an artificial drop can be created by providing the supply element at a raised level relative to the bottom of the discharge element, so that the water is pushed through the porous layer under the influence of the pressure gradient created by the increased height of the water in the supply element. In general, the channel constructions will be closed, in order to prevent soiling.

The system resulting from the method according to the present invention can be used not only for heat storage in the groundwater, but also for keeping the wearing course free of ice. Should the porous intermediate layer freeze up, no damage will be caused in that case. Supplying warm water to the porous layer means that gritting costs can be reduced substantially and less damage is caused to the environment by salt.

The term "wearing course", as used in this context, refers to a road surface, roof parking area, car park, airport apron, aircraft runway, cycle path etc. The paving according to the invention can also be used as a dike revetment, where the latter may or may not act as a wearing course. When the solar collector is used on a bridge surface, the solar collector can be used for heating the bridge surface itself; when used on a road surface, the road surface can be heated or buildings situated along the road can be heated, and the solar collector can be connected to a heating/air conditioning system of such a building. When it is used on a roof parking area, the building below can be heated, while when it is used in a car park, the supermarket which may be adjacent can be heated. In the case of an airport apron or runway the departure lounges or the working areas etc. can be heated.

A number of embodiments of a paving according to the present invention will be described in greater detail with reference to the appended drawing, in which:
Figure 1 shows a diagrammatic cross section of the layer construction of the paving according to the present invention;
Figure 2 shows a construction in which the supply and discharge elements are formed by a channel, using the gradient of the road surface;
Figure 3 shows a construction in which no height difference is present between supply and discharge element.

Figure 1 shows a lateral cross section of a paving 1 provided with a base course 2 of asphalt, sand cement, concrete etc. This base course 2 is placed on a foundation of concrete or sand. A sealing layer 3 approximately 2-4 cm thick, for example in the form of a watertight asphalt layer, is placed on the base course 2. On top of the sealing layer 3 lies a porous layer 4 as a conveying element for water in the transverse direction T. The porous layer 4 is formed by, for example, a layer of very open-textured asphalt concrete with a thickness of approximately 4-6 cm and with a voids ratio between 25 and 30%. The particle size of the porous layer 4 lies predominantly between 6 mm and 8 mm, or between 8 mm and 11 mm, or between 11 mm and 16 mm. The porous layer 4 is covered by a top layer 5, which forms the wearing course of the paving, and which is, for example, formed by a layer of asphalt concrete with a relatively low voids ratio and a thickness of approximately 3 to 5 cm. The layers 2, 3, 4 and 5 have both the function of paving layer which meets the traffic requirements as regards load and that of solar collector, in the case of which the dark properties of the top layer 5 make it very suitable for absorbing solar heat.

Figure 2 shows an embodiment in which, as a result of the gradient of the road surface, which is, for example, 2%, the water is conveyed through the porous layer 4 from a supply element 6 to a discharge element 7. The supply element 6 can connect to the porous water-conducting layer in the dense base course 2, which in this case is designed as a channel around the porous layer 4. A pipe system situated in the longitudinal direction of the paving can be connected to the supply element 6 and the discharge element 7. It is also possible for a separate channel to be provided along the supply elements 6 and discharge elements 7, which are provided at regular mutual intervals.

The sealing layer 3 is preferably of an insulating design, and said layer comprises, for example, asphalt with lightweight granules or cellular concrete. This will make the temperature of the porous layer rise more quickly, and the efficiency of the solar collector increases.

In the embodiment according to Figure 3 the wearing course is horizontal and the supply element comprises a channel 9 whose bottom 10 is formed by the porous layer 4. The discharge element is formed by a channel 8 whose bottom 12 is situated at a lower level than the bottom 10 of the channel 9. Part of the side wall 11 of the channel 8 is formed by the porous layer 4, and water is conveyed through the porous layer from the supply channel 9 to the discharge channel 8 as a result of the difference in height between the water levels in channel 9 and channel 8.

After discharge through the opening 7 by way of heat pumps or otherwise, the water heated in the porous layer 4 can be used directly for heating buildings or can be stored in the deep groundwater. According to requirements, the warm groundwater can be pumped up again and used for heating, either of the paving 1 by supplying to the supply opening 6 or the supply channel 9 or for heating of buildings situated near the road surface. A suitable combination of top layer 5 and porous layer 4 is formed by a two-layer very open-textured asphalt concrete construction such as that manufactured by applicant under the brand name of DUOLAY.

## Claims

1. Method of providing a paving or revetment (1) extending in a longitudinal direction comprising a top surface and a conveying element (3, 4, 6, 7, 8, 9) for conveying a liquid along the top surface, and for the transfer of heat between the top surface and the liquid, the paving comprises a top layer (5) with a porous layer (4) underneath it having at least 20% voids, and a sealing layer (3) situated beneath the porous layer, a discharge element (7, 8) which connects to the porous layer (4) for the discharge of the liquid from the layer, and at a distance from the discharge element (7, 8), provision is made for a supply element (6,9 connecting to the porous layer (4), for the supply of liquid to the porous layer, the discharge element (7, 8) and the supply element (6, 9) extending in the longitudinal direction along the paving or revetment (1) **characterized in that**, the porous layer (4) comprising very open-textured asphalt concrete with a voids ratio of at least 20%, preferably between 25% and 35%, the top layer (5) comprising asphalt wherein the top layer and the porous layer are constructed by asphalt spreading of the layers (4, 5).

2. Method of providing a paving or revetment (1) according to Claim 1, **characterized in that** the top surface is a wearing course.

3. Method of providing a paving or revetment (1) according to Claim 1 or 2, **characterized in that** the particle size of the porous layer (4) lies predominantly between 6 mm and 8 mm, or between 8 mm and 11 mm, or between 11 mm and 16 mm.

4. Method of providing a paving or revetment (1) according to Claim 1, 2 or 3, **characterized in that** the sealing layer (3) comprises an at least virtually watertight asphalt layer.

5. Method of providing a paving or revetment (1) according to Claim 4, **characterized in that** the sealing layer (3) comprises an insulating material.

6. Method of providing a paving or revetment (1) according to one of the preceding Claims, **characterized in that** the top layer (5) comprises a layer with a voids ratio between 20% and 40%, preferably between 25% and 35%, and with a particle size predominantly between 1 mm and 3 mm, between 2 mm and 4 mm, or between 3 mm and 5 mm.

7. Method of providing a paving or revetment (1) according to one of the preceding Claims, **characterized in that** the sealing layer slopes between the supply element (6, 9) and the discharge element (7, 8).

8. Method of providing a paving or revetment (1) according to one of the preceding Claims, **characterized in that** the supply element (6, 9) comprises a substantially U-shaped channel (9) whose bottom (10) and / or part of the side wall is formed by the layer of the porous material (4), and **in that** the discharge element (7, 8) comprises a substantially U-shaped channel (8) in which a side wall (11) is at least partially formed by the layer of porous material (4), and whose bottom (12) is impermeable, the bottom (12) of the channel (8) of the discharge element being at a lower level than the bottom (10) of the channel (9) of the supply element and being provided with a liquid discharge element (7).

9. Method of providing a paving or revetment (1) according to one of the preceding Claims, **characterized in that** the top surface is provided on a slope of, for example, a dike, noise protection dam or water-retaining structure.

## Patentansprüche

1. Verfahren zur Bereitstellung eines Belags oder einer Verkleidung (1), der/die sich in einer Längsrichtung erstreckt, umfassend eine Deckfläche und ein Förderelement (3, 4, 6, 7, 8, 9) zum Fördern einer Flüssigkeit entlang der Deckfläche und zur Wärmeübertragung zwischen der Deckfläche und der Flüssigkeit, wobei der Belag umfasst: eine Deckschicht (5) mit einer porösen Schicht (4) unter ihr mit mindestens 20% Leervolumen und eine Abdichtungsschicht (3), die sich unter der porösen Schicht befindet, ein Abgangselement (7, 8), das mit der porösen Schicht (4) in Verbindung steht, für den Abgang der Flüssigkeit aus der Schicht, und wobei in einem Abstand vom Abgangselement (7, 8) ein mit der porösen Schicht (4) in Verbindung stehendes Zuführungselement (6, 9) für die Zuführung von Flüssigkeit zur porösen Schicht vorgesehen ist, wobei sich das Abgangselement (7, 8) und das Zuführungselement (6, 9) in der Längsrichtung entlang dem Belag oder der Verkleidung (1) erstrecken, **dadurch gekennzeichnet, dass** die poröse Schicht (4) einen sehr offen strukturierten Asphaltbeton mit einem Leervolumenanteil von mindestens 20%, vorzugsweise zwischen 25% und 35%, umfasst, wobei die Deckschicht (5) Asphalt umfasst, wobei die Deckschicht und die poröse Schicht durch Asphaltausbreiten der Schichten (4, 5) ausgeführt werden.

2. Verfahren zur Bereitstellung eines Belags oder einer Verkleidung (1) nach Anspruch 1, **dadurch gekennzeichnet, dass** die Deckfläche eine Verschleißdecke ist.

3. Verfahren zur Bereitstellung eines Belags oder einer Verkleidung (1) nach Anspruch 1 oder 2, **dadurch gekennzeichnet, dass** die Partikelgröße der porösen Schicht (4) überwiegend zwischen 6 mm und 8 mm, oder zwischen 8 mm und 11 mm, oder zwischen 11 mm und 16 mm liegt.

4. Verfahren zur Bereitstellung eines Belags oder einer Verkleidung (1) nach Anspruch 1, 2 oder 3, **dadurch gekennzeichnet, dass** die Abdichtungsschicht (3) eine mindestens praktisch wasserdichte Asphaltschicht umfasst.

5. Verfahren zur Bereitstellung eines Belags oder einer Verkleidung (1) nach Anspruch 4, **dadurch gekennzeichnet, dass** die Abdichtungsschicht (3) ein Dämmmaterial umfasst.

6. Verfahren zur Bereitstellung eines Belags oder einer Verkleidung (1) nach einem der vorangehenden Ansprüche, **dadurch gekennzeichnet, dass** die Deckschicht (5) eine Schicht mit einem Leervolumenanteil zwischen 20% und 40%, vorzugsweise zwischen 25% und 35%, und mit einer Partikelgröße überwiegend zwischen 1 mm und 3 mm, zwischen 2 mm und 4 mm, oder zwischen 3 mm und 5 mm umfasst.

7. Verfahren zur Bereitstellung eines Belags oder einer Verkleidung (1) nach einem der vorangehenden Ansprüche, **dadurch gekennzeichnet, dass** die Abdichtungsschicht zwischen dem Zuführungselement (6, 9) und dem Abgangselement (7, 8) schräg abfällt.

8. Verfahren zur Bereitstellung eines Belags oder einer Verkleidung (1) nach einem der vorangehenden Ansprüche, **dadurch gekennzeichnet, dass** das Zufuhrungselement (6, 9) einen im Wesentlichen U-förmigen Kanal (9) umfasst, dessen Boden (10) und/oder Teil der Seitenwand durch die Schicht des porösen Materials (4) gebildet wird, und dadurch, dass das Abgangselement (7, 8) einen im Wesentlichen U-förmigen Kanal (8) umfasst, in dem eine Seitenwand (11) mindestens teilweise durch die Schicht von porösem Material (4) gebildet wird und dessen Boden (12) undurchlässig ist, wobei sich der Boden (12) des Kanals (8) des Abgangselements auf einem tieferen Niveau befindet als der Boden (10) des Kanals (9) des Zuführungselements und mit einem Flüssigkeitsabgangselement (7) versehen ist.

9. Verfahren zur Bereitstellung eines Belags oder einer Verkleidung (1) nach einem der vorangehenden Ansprüche, **dadurch gekennzeichnet, dass** die Deckfläche auf einer Schrägen von z.B. einem Damm, Lärmschutzdamm oder Wasserrückhaltestruktur bereitgestellt wird.

## Revendications

1. Procédé de fabrication d'un pavage ou revêtement (1) s'étendant longitudinalement, comprenant une partie supérieure et un élément d'acheminement (3, 4, 6, 7, 8, 9) consistant à transporter un liquide le long de la partie supérieure, et à transférer la chaleur entre la partie supérieure et le liquide, le pavage est constitué d'une couche supérieure (5) avec, en dessous, une couche poreuse (4) avec un indice de vide d'au moins 20 %, et une couche d'étanchement (3) située sous la couche poreuse, un élément d'écoulement (7, 8) qui est relié à la couche poreuse (4) pour permettre l'écoulement du liquide de cette couche et à distance de l'élément d'écoulement (7, 8), on prévoit un élément d'alimentation (6, 9) relié à la couche poreuse (4), pour l'alimentation de liquide vers la couche poreuse, l'élément d'écoulement (7, 8) et l'élément d'alimentation (6, 9) s'étendant longitudinalement le long du pavage ou du revêtement (1), **caractérisés en ce que** la couche poreuse (4) comprenant un béton d'asphalte très ouvert avec indice de vide d'au moins 20 %, de préférence compris entre 25 % et 35 %, la partie supérieure comprenant de l'asphalte dans laquelle la couche supérieure et la couche poreuse sont formées par répandage d'asphalte sur les couches (4, 5).

2. Procédé de fabrication d'un pavage ou revêtement (1) selon la revendication 1, **caractérisé en ce que** la partie supérieure est une couche d'usure.

3. Procédé de fabrication d'un pavage ou revêtement (1) selon la revendication 1 ou 2, **caractérisé en ce que** la taille des particules de la couche poreuse (4) est principalement comprise entre 6 mm et 8 mm, ou entre 8 mm et 11 mm ou entre 11 mm et 16 mm,

4. Procédé de fabrication d'un pavage ou revêtement (1) selon la revendication 1, 2 ou 3,
**caractérisé en ce que** la couche d'étanchement (3) comprend au moins une couche d'asphalte effectivement étanche à l'eau.

5. Procédé de fabrication d'un pavage ou revêtement (1) selon la revendication 4, **caractérisé en ce que** la couche d'étanchement (3) comprend un matériau d'isolation.

6. Procédé de fabrication d'un pavage ou revêtement (1) selon l'une quelconque des revendications précédentes, **caractérisé en ce que** la couche supérieure (5) comprend une couche avec un indice de vide compris entre 20 % et 40 %, de préférence entre 25 % et 35 %, et avec une taille de particules principalement comprise entre 1 mm et 3 mm, entre 2 mm et 4 mm ou entre 3 mm et 5 mm.

7. Procédé de fabrication d'un pavage ou revêtement (1) selon l'une quelconque des revendications précédentes, **caractérisé en ce que** la couche d'étanchement est en pente entre l'élément d'alimentation (6, 9) et l'élément d'écoulement (7, 8).

8. Procédé de fabrication d'un pavage ou revêtement (1) selon l'une quelconque des revendications précédentes, **caractérisé en ce que** l'élément d'alimentation (6, 9) comprend une rigole en forme de U dans l'ensemble (9) dont la partie inférieure (10) et/ou la partie de la paroi latérale sont formées d'une couche de matériau poreux (4), et **en ce que** l'élément d'écoulement (7, 8) comprend une rigole en forme de U (8) dans l'ensemble dans laquelle la paroi latérale (11) est au moins formée partiellement par la couche de matériau poreux (4), et dont la partie inférieure (12) est imperméable, la partie inférieure (12) de la rigole (8) de l'élément d'écoulement se trouvant à un niveau inférieur par rapport à la partie inférieure (10) de la rigole (9) de l'élément d'alimentation et étant équipée d'un élément d'écoulement des liquides (7).

9. Procédé de fabrication d'un pavage ou revêtement (1) selon l'une quelconque des revendications précédentes, **caractérisé en ce que** la partie supérieure se trouve sur la pente, par exemple, d'un drain, d'un barrage antibruit ou d'une structure de retenue d'eau.
